# EUROPEAN PATENT APPLICATION

(11) **EP 4 782 249 A1**
(43) Date of publication of application: **29.07.2026**
(21) Application number: 25857971.3
(22) Date of filing: 16.07.2025
(51) Int. Cl.: B60L 3/00, B60L 50/40, H02J 7/00, H02J 7/34

(54) **BATTERY ACTIVE DISCHARGE DEVICE AND CONTROL DEVICE THEREOF**

(30) Priority: 09.12.2024 KR 20240181306
(71) Applicant: LG ENERGY SOLUTION, LTD., Seoul 07335 (KR)
(72) Inventor: YU, Donghyeon, Yuseong-gu, Daejeon 34122 (KR)
(74) Representative: BCKIP Part mbB
(86) International application number: PCT/KR2025/010474
(87) International publication number: WO 2026/127251

(57) **Abstract**

A battery active discharge device may include a capacitor arranged on a vehicle side and configured to maintain a link voltage in a smoothed state, a pre-charge resistor arranged on a battery side and configured to charge or discharge the capacitor arranged on the vehicle side, a main positive relay arranged on the battery side, and a pre-charge relay having a first end connected to a first end of the main positive relay and a second end connected to a first end of the pre-charge resistor.

## Description

### [Technical Field]

The present disclosure relates to a battery active discharge device and a control device thereof, and particularly, to a device for optimizing a battery system by structurally integrating an active discharge circuit (resistor, switch) on a vehicle side into a battery side (the active discharge resistor on the vehicle side being replaced in function by a pre-charge resistor on the battery side, and the active discharge switch being relocated), thereby eliminating the use of the active discharge resistor as a vehicle component, and a control device thereof.

### [Background Art]

Examples of currently commercialized secondary batteries include nickelcadmium batteries, nickel-metal hydride batteries, nickel-zinc batteries, and lithium secondary batteries. Among these, lithium secondary batteries are attracting attention for their advantages of hardly exhibiting a memory effect compared with nickel-based secondary batteries, allowing free charging and discharging, having a very low self-discharge rate, and providing high energy density.

Recently, secondary batteries are widely used for driving or energy storage in vehicles such as electric motorcycles and electric vehicles, and medium and large-sized devices such as energy storage systems (ESS). Accordingly, interest in batteries is further increasing, and research and development on batteries are being conducted more actively. Furthermore, for batteries used in vehicles, commercialization and research on interchangeable common battery packs are being actively conducted.

A lithium secondary battery mainly uses a lithium-based oxide and a carbon material as a positive electrode active material and a negative electrode active material, respectively. A lithium secondary battery includes an electrode assembly in which a positive electrode plate and a negative electrode plate, each coated with a positive electrode active material and a negative electrode active material, respectively, are arranged with a separator interposed therebetween, and an exterior material (i.e., a battery case) that seals and houses the electrode assembly together with an electrolyte solution. Lithium secondary batteries may be classified, depending on the shape of the exterior material, into can-type secondary batteries in which the electrode assembly is housed in a metal can, and pouch-type secondary batteries in which the electrode assembly is housed in a pouch of an aluminum laminate sheet. The can-type secondary batteries may be further classified into prismatic secondary batteries and cylindrical secondary batteries depending on their shapes.

A plurality of secondary batteries may be accommodated together inside a module case (module housing) or a pack case (pack housing) while being electrically connected to one another, thereby forming a battery module or a battery pack. In this case, each secondary battery included in the battery module or battery pack may be referred to as a battery cell.

To ensure stable performance of batteries in the form of battery cells, battery modules, or battery packs, and to protect devices equipped with batteries or users of batteries, it is very important to diagnose the condition of the battery and take appropriate measures accordingly. As a representative technology for this, battery packs, energy storage systems (ESS), and the like include a control device such as a battery management system (BMS), which diagnoses the battery and performs appropriate measures.

In this case, when a problem occurs in a battery, the main positive/negative relays inside the battery are opened, and the X-cap connected to the battery link voltage also needs to be discharged. This is to prevent an HV voltage from being applied to vehicle components (e.g., an inverter, a DC-DC converter, and the like) connected to the link voltage. In this case, an active discharge circuit (resistor, switch) is arranged on the vehicle side in order to discharge the X-cap. Placement of an active discharge resistor and an active discharge switch is required, resulting in a fixed cost for battery system application.

That is, according to the related art, the main positive/negative relays, the pre-charge relay for pre-charge, and the pre-charge resistor (R1) are arranged on the battery side. On the vehicle side, an X-cap (C1) is provided, and an active discharge switch (SW1) and an active discharge resistor (R2) are arranged to discharge a voltage generated in the X-cap when the relay is opened.

The related art described above is technical information that the present inventors possessed for the purpose of conceiving the present disclosure or acquired in the course of conceiving the present disclosure, and cannot necessarily be regarded as technology known to the general public prior to the filing of the present disclosure.

### [Disclosure]

### [Technical Problem]

The problem to be solved by the present disclosure is to relocate a resistor and a switch for active discharge, which are arranged on a vehicle side, to a battery side, while integrating functions in the case of replaceable components.

### [Technical Solution]

A technical solution achieved by the present disclosure relates to a battery active discharge device which may include a capacitor arranged on a vehicle side and configured to maintain a link voltage in a smoothed state, and a pre-charge resistor arranged on a battery side and configured to charge or discharge the capacitor arranged on the vehicle side.

In an embodiment, the battery active discharge device may further include a main positive relay arranged on the battery side, and a pre-charge relay having a first end connected to a first end of the main positive relay and a second end connected to a first end of the pre-charge resistor, and a second end of the pre-charge resistor may be connected to a second end of the main positive relay.

In an embodiment, the capacitor may be charged through the pre-charge resistor when the pre-charge relay is turned on.

In an embodiment, the battery active discharge device may further include a main negative relay arranged on the battery side, and an active discharge switch having a first end connected between the second end of the pre-charge relay and the first end of the pre-charge resistor, and a second end connected to one end of the main negative relay.

In an embodiment, the capacitor may be discharged through the pre-charge resistor when the active discharge switch is turned on.

### [Advantageous Effects]

According to the technical solution of the present disclosure described above, the pre-charge resistor arranged on the battery side can replace the active discharge resistor required to be arranged on the vehicle side.

In addition, according to the technical solution of the present disclosure described above, the unit cost of the battery system can be reduced by not applying the active discharge resistor component on the vehicle side.

### [Description of Drawings]

FIG. 1 is a block diagram illustrating a battery active discharge device according to an embodiment of the present disclosure.
FIGS. 2 and 3 are diagrams illustrating operations that may be performed by the battery active discharge device, according to some embodiments of the present disclosure.
FIG. 4 is a diagram illustrating a computing device that may implement a device and/or system according to various embodiments of the present disclosure.

### [Best Mode]

Hereinafter, embodiments of the present disclosure will be described in detail with reference to the accompanying drawings. The advantages and features of the present disclosure, and a method for achieving the same will become apparent with reference to embodiments described in detail below together with the accompanying drawings. However, the spirit of the present disclosure is not limited to the embodiments disclosed below, but can be implemented in a variety of different forms. The embodiments are provided to only complete the spirit of the present disclosure and to allow one skilled in the art to which the present disclosure belongs to completely understand the category of the present disclosure. The spirit of the present disclosure is only defined by the category of the claims.

It should be noted that in adding reference numerals to components of each drawing, the same components are given the same reference numeral as much as possible even when they are illustrated in different drawings. In addition, in describing the present disclosure, detailed descriptions of related known configurations or functions are omitted when it is determined that such detailed descriptions would obscure the gist of the present disclosure.

Unless otherwise defined, all terms (including technical and scientific terms) used herein may be used in a commonly understood sense by one skilled in the art to which the present disclosure belongs. In addition, terms defined in commonly used dictionaries should not be interpreted in an idealized or excessive sense unless defined explicitly and specially. Terminology used herein is intended to describe the embodiments and is not intended to limit the present disclosure. As used herein, the singular forms are intended to include the plural forms as well, unless the context clearly indicates otherwise.

Additionally, in describing components of the present disclosure, terms such as first, second, A, B, (a), (b), and the like may be used. The terms are only used to distinguish the components from other components, and the nature, sequence, or order of the corresponding component is not limited by the term. When a component is described as being "connected," "coupled," or "linked" to another component, it should be understood that the component may be directly connected or coupled to the other component, but another component may also be "connected," "coupled," or "linked" between the components.

The terms such as "comprises", "comprising", "includes", and/or "including", when used herein, specify the presence of stated components, steps, operations, and/or elements, but do not preclude the presence or addition of one or more other components, steps, operations, and/or elements.

Hereinafter, various embodiments of the present disclosure will be described in detail with reference to the accompanying drawings.

Additionally, in describing components of the present disclosure, terms such as first, second, A, B, (a), (b), and the like may be used. The terms are only used to distinguish the components from other components, and the nature, sequence, or order of the corresponding component is not limited by the term. Throughout the specification, unless explicitly described to the contrary, the terms "comprise (include)", "have", and variations such as "comprises (includes)", "comprising (including)", and "having" will be understood to imply the inclusion of stated components but not the exclusion of any other components. In addition, terms such as "unit" and "module" as used herein refer to a unit that handles at least one function or operation, which may be implemented in hardware or software, or a combination of hardware and software.

Hereinafter, an active discharge device and method according to an embodiment of the present disclosure will be described in detail with reference to the accompanying drawings.

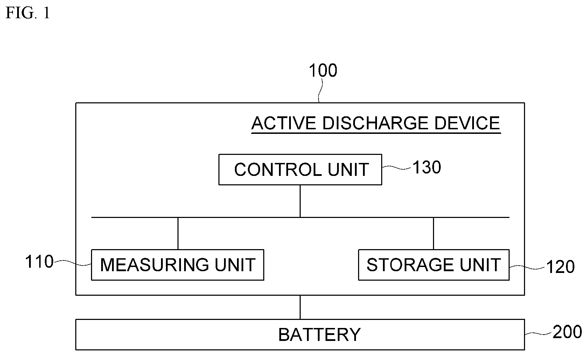

First, an active discharge device according to an embodiment of the present disclosure will be described with reference to FIG. 1.

FIG. 1 is a block diagram illustrating a battery active discharge device according to an embodiment of the present disclosure.

Referring to FIG. 1, an active discharge device 100 according to an embodiment of the present disclosure may perform a diagnostic operation and/or a control operation of a battery 200.

Here, the battery 200 may be a concept including a battery cell representing a single secondary battery, a battery cell group including a plurality of battery cells, a battery module, a battery pack, a battery rack, and the like.

To this end, the active discharge device 100 may include a measuring unit 110, a storage unit 120, and a control unit 130.

The measuring unit 110 may be configured to measure state information on the battery 200.

Here, the state information on the battery 200 may include an internal state and/or an external state of the battery 200. For example, the measuring unit 110 may measure information on the internal state of the battery 200, such as voltage, current, temperature, state of charge (SOC), depth of discharge (DOD), internal resistance, state of health (SOH), rest state, overvoltage or overcurrent state, and balancing state. To this end, the measuring unit 110 may include various sensors such as a voltage sensor and a current sensor. As another example, the measuring unit 110 may measure information on the external state of the battery 200, such as temperature, humidity, and smoke around the battery 200. To this end, the measuring unit 110 may include sensors such as a temperature sensor, a humidity sensor, and a smoke sensor. In this respect, the measuring unit 110 may also be referred to as a sensor.

In this case, the measuring unit 110 may measure voltage, current, temperature, and the like through sensors to measure the state information on the battery 200 in a one-dimensional manner. In addition, the measuring unit 110 may perform two-dimensional processing, such as calculation, on the information acquired in a one-dimensional manner. For example, the measuring unit 110 may measure the state information on the battery 200 by calculating or estimating the state of the battery 200, such as the state of charge (SOC), internal resistance, remaining life (SOH), and imbalance, based on the state information such as voltage, current, and temperature.

The measuring unit 110 may transmit the measured state information on the battery 200 to the control unit 130.

The storage unit 120 may be configured to store computer-executable instructions, program codes, program data, and/or other suitable forms of information for enabling each component of the active discharge device 100, i.e., the measuring unit 110 and/or the control unit 130, to perform its function. The program stored in the storage unit 120 may include a set of instructions that can be executed by the control unit 130. In an embodiment of the present disclosure, the storage unit 120 may be a memory (a volatile memory such as a random access memory, a non-volatile memory, or a suitable combination thereof), one or more magnetic disk storage devices, optical disk storage devices, flash memory devices, other forms of storage media that can be accessed by the active discharge device 100 and can store desired information, or a suitable combination thereof.

In this case, the storage unit 120 may be implemented in an integrated form with another component included in the active discharge device 100, such as a component that functions as the control unit 130. For example, the storage unit 120 may be implemented in the form of built-in memory mounted on a processor that functions as the control unit 130.

The control unit 130 may receive the measured state information from the measuring unit 110. The control unit 130 may perform a diagnostic operation and/or a control operation of the battery 200 using the state information received from the measuring unit 110.

In this case, the control unit 130 may transmit or store information resulting from the diagnostic operation and/or control operation of the battery 200 to another component. Here, the other component may be a component included in the active discharge device 100 according to an embodiment of the present disclosure, or may be a component included in another device existing outside the active discharge device 100. In particular, when the target battery 200 is mounted on a vehicle, the active discharge device 100 may transmit the information resulting from the diagnostic operation and/or control operation of the battery 200 to a vehicle-side upper control system, such as a vehicle control unit (VCU) and an electronic control unit (ECU).

In addition, the control unit 130 may transmit the information resulting from the diagnostic operation and/or control operation of the battery 200 via various wired or wireless communication configurations or methods. For example, the control unit 130 may transmit the information resulting from the diagnostic operation and/or control operation of the battery 200 to a vehicle-side control system via controller area network (CAN) communication.

In addition, the control unit 130 may be configured to control a charging operation or discharging operation of the battery 200 as one of control operations of the battery 200. In this case, the control unit 130 may directly perform charging control or discharging control for the battery 200. Alternatively, the control unit 130 may indirectly instruct or control another component located inside or outside the active discharge device 100 to perform charging control or discharging control.

In addition, the control unit 130 may perform processing operations according to the states of the battery 200. In this case, the control unit 130 may be configured to perform different processing operations for respective states. In addition, the control unit 130 may perform at least partially the same processing operation for different states. In addition, the processing operations that are performed by the control unit 130 does not necessarily include only active operations, and may also include passive operations. In particular, the processing operations that are performed by the control unit 130 may include not performing any control or communication.

In addition, when the control unit 130 directly performs the processing operation of the battery 200, it may transmit the performed processing result to another component.

In addition, a battery management operation according to an embodiment of the present disclosure may be applied not only to a single battery cell, but also to a unit including a plurality of battery cells, such as a cell assembly, a battery module, a battery pack, a battery rack, or an energy storage system (ESS).

In addition, the control unit 130 may perform related operations or functions by selectively including, at least in part, a processor, a controller, an application-specific integrated circuit (ASIC), another chipset, a logic circuit, a register, a communication modem, a data processing device, and the like known in the art. Additionally, their operations may be implemented in software, in which case the program may be stored in the storage unit 120. In this respect, the control unit 130 may be used interchangeably with terms such as a processor, a controller, or a chipset. In addition, at least some functions of the measuring unit 110 may also be implemented by these components.

In addition, the control unit 130 does not necessarily need to be physically integrated or arranged at the same location. For example, some functions of the control unit 130 may be performed on the battery 200 side, and other functions of the control unit 130 may be performed on the vehicle side.

More specifically, at least a part of the control unit 130 may be implemented by a battery management system (BMS) typically included in a battery pack, an energy storage system (ESS), and the like. In this case, at least a part of the control unit 130 may be implemented in a form included in the battery 200. Alternatively, at least a part of the control unit 130 may be located outside the active discharge device 100. For example, at least some functions of the control unit 130 may be implemented by a control device mounted on a vehicle, such as a VCU or an ECU. In addition, the measuring unit 110 may also be implemented as an integrated component or as a separate component.

Note that one active discharge device 100 may integrate and perform a diagnostic operation and/or a control operation for each of a plurality of batteries 200. Alternatively, a single active discharge device 100 may be provided for each battery 200. For example, when three batteries 200 are provided, three active discharge devices 100 may be provided to perform a diagnostic operation and/or a control operation for each of the three batteries 200. In this case, among the plurality of active discharge devices 100, one active discharge device 100 may operate as a master device, and the remaining active discharge devices 100 may operate as slave devices. One active discharge device 100 operating as a master device may control operations of the remaining active discharge devices 100 operating as slave devices in order to perform integrated management of a plurality of batteries 200. In addition, all of the plurality of active discharge devices 100 may operate as slave devices, and a separate active discharge device 100 may be provided in order to control operations of all of the plurality of active discharge devices 100 operating as slave devices.

In particular, the control unit 130 according to an embodiment of the present disclosure converts thermal energy into electrical energy and lowers a temperature of a PCB board increased due to heat generation through a cooling system. Power for an operation of the cooling system may be configured to be supplemented through an energy harvesting circuit.

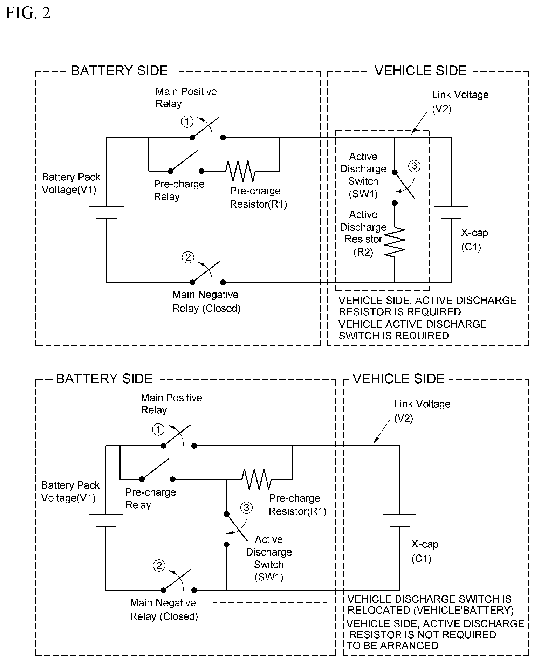

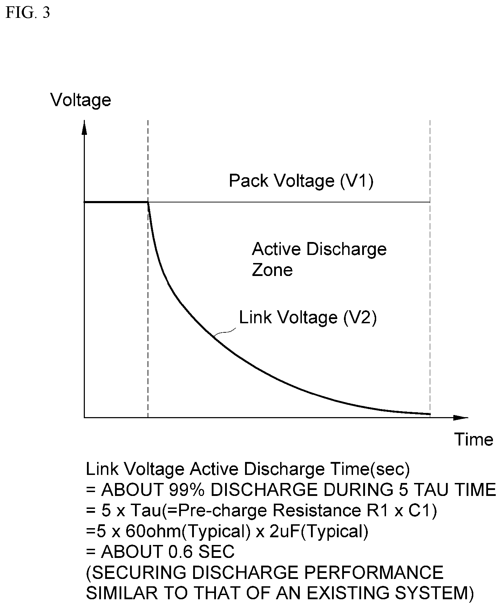

Hereinafter, a method that may be performed by an active discharge device according to an embodiment of the present disclosure will be described with reference to FIGS. 2 and 3.

FIGS. 2 and 3 are diagrams illustrating operations that may be performed by the battery active discharge device, according to some embodiments of the present disclosure.

As for the present disclosure, when a problem occurs in a battery, the main positive/negative relays inside the battery are opened, and the X-cap connected to the battery link voltage also needs to be discharged. This is to prevent an HV voltage from being applied to vehicle components (e.g., an inverter, a DC-DC converter, and the like) connected to the link voltage. In this case, an active discharge circuit (resistor, switch) is arranged on the vehicle side in order to discharge the X-cap. Placement of an active discharge resistor and an active discharge switch is required, resulting in a fixed cost for battery system application.

That is, according to the related art, the main positive/negative relays, the pre-charge relay for pre-charge, and the pre-charge resistor (R1) are arranged on the battery side. On the vehicle side, an X-cap (C1) is provided, and an active discharge switch (SW1) and an active discharge resistor (R2) are arranged to discharge a voltage formed in the X-cap when the relay is opened.

The active discharge circuit is intended to discharge the X-cap of a link voltage terminal in the event of a system problem. Typically, a resistor and a switch for active discharge are arranged at a vehicle terminal to discharge the X-cap, and discharging the X-cap prevents a high voltage from being applied to vehicle components (e.g., an inverter, a DC-DC converter, and the like) connected to the battery.

The present disclosure is intended to relocate a resistor and a switch for active discharge, which are arranged on a vehicle side, to a battery side, while integrating functions in the case of replaceable components, and the resistor for active discharge can be replaced with a pre-charge resistor on the battery side. The pre-charge resistor is designed based on the battery voltage and current for the purpose of charging the X-cap. Since the battery voltage and current are the same as those during charging and discharging, they can also be used to discharge the X-cap through the pre-charge resistor. The switch for active discharge is relocated from the vehicle side to the battery side and arranged between a negative (-) potential of the X-cap and the pre-charge resistor, thereby enabling the X-cap to be discharged through the pre-charge resistor.

The related art relates to a battery-side pre-charge resistor, a vehicle-side active discharge resistor, and a vehicle-side active discharge switch.

The present disclosure relates to a battery-side pre-charge resistor and a battery-side active discharge switch.

In the case of the present disclosure, as in the related art, main positive/negative relays, a pre-charge relay, and a resistor (R1) are provided on the battery side, but an active discharge switch (SW1) is additionally provided. On the vehicle side, only X-cap (C1) is provided, and an active discharge SW or a resistor (R2) of the related art is not provided.

Main positive/negative relays: relays that serve as switches to connect the battery voltage/power to the vehicle terminal outside the battery, typically including one relay arranged at HV+ (positive) and one relay arranged at HV- (negative).

X-cap: A vehicle terminal capacitor to maintain a link voltage, which is an external voltage of the battery relay, in a smoothed state.

Active discharge: A discharge operation for rapidly discharging a link voltage formed in an X-cap outside the battery in the event of a battery problem, by separately connecting an active discharge resistor to perform the discharge.

The pre-charge resistor arranged on the battery side can replace the active discharge resistor required to be arranged on the vehicle side (the active discharge switch needs to be relocated from the vehicle side to the battery side).

Accordingly, the unit cost of the battery system can be reduced by not applying the active discharge resistor component on the vehicle side.

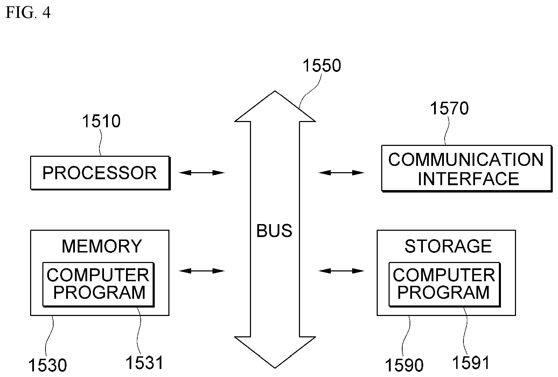

Below, a computing device in which an active discharge-related control device can be implemented will be described with reference to FIG. 4.

FIG. 4 is a diagram illustrating a computing device that may implement a device and/or system according to various embodiments of the present disclosure.

A computing device 1500 may include one or more processors 1510, a bus 1550, a communication interface 1570, a memory 1530 that loads a computer program 1591 to be executed by the processor 1510, and a storage 1590 that stores the computer program 1591. However, only components related to the embodiment of the present disclosure are illustrated in FIG. 4. Therefore, one skilled in the art will appreciate that other general components may be further included, in addition to the components illustrated in FIG. 4.

The processor 1510 controls the overall operation of each component of the computing device 1500. The processor 1510 may be configured to include a central processing unit (CPU), a microprocessor unit (MPU), a micro controller unit (MCU), a graphics processing unit (GPU), or any other form of processor well known in the art of the present disclosure. Additionally, the processor 1510 may perform operations for at least one application or program to execute a method according to embodiments of the present disclosure. The computing device 1500 may have one or more processors.

The memory 1530 stores various data, commands and/or information. The memory 1530 may load one or more programs 1591 from the storage 1590 to execute a method according to embodiments of the present disclosure. The memory 1530 may be implemented as a volatile memory such as a RAM, but the technical scope of the present disclosure is not limited thereto.

The bus 1550 provides communication between components of the computing device 1500. The bus 1550 may be implemented as various types of buses, such as an address bus, a data bus, and a control bus.

The communication interface 1570 supports wired and wireless Internet communication of the computing device 1500. Additionally, the communication interface 1570 may support various communication methods other than Internet communication. To this end, the communication interface 1570 may be configured to include a communication module well known in the technical field of the present disclosure.

According to some embodiments, the communication interface 1570 may be omitted.

The storage 1590 may non-temporarily store one or more programs 1591 and various data.

The storage 1590 may be configured to include a non-volatile memory such as a read only memory (ROM), an erasable programmable ROM (EPROM), an electrically erasable programmable ROM (EEPROM), and a flash memory, a hard disk, a removable disk, or any form of computer-readable recording medium well known in the art to which the present disclosure belongs.

The computer program 1591 may include one or more instructions that, when loaded into the memory 1530, cause the processor 1510 to perform methods/operations according to various embodiments of the present disclosure. That is, the processor 1510 may perform methods/operations according to various embodiments of the present disclosure by executing the one or more instructions.

Various embodiments of the present disclosure and effects according to the embodiments have been described above with reference to FIGS. 1 to 4. The effects according to the spirit of the present disclosure are not limited to the effects mentioned above, and other effects not mentioned will be clearly understood by one skilled in the art from the description of the specification.

The spirit of the present disclosure described above with reference to FIGS. 1 to 4 may be implemented as computer-readable codes on a computer-readable medium. The computer-readable recording medium may be, for example, a removable recording medium (CD, DVD, Blu-ray disc, USB storage device, removable hard disk) or a fixed recording medium (ROM, RAM, computer-attached hard disk). The computer program recorded on the computer-readable recording medium may be transmitted to another computing device via a network such as the Internet, installed on the other computing device, and thus used in the other computing device.

Although all components constituting the embodiments of the present disclosure have been described as being combined into one or operated in combination, the spirit of the present disclosure is not necessarily limited to such embodiments. That is, within the scope of the present disclosure, all components may be selectively combined and operated with one or more.

Although operations are shown in a specific order in the drawings, it should not be understood that desired results can be obtained when the operations must be performed in the specific order or sequential order or when all of the illustrated operations must be performed. In certain situations, multitasking and parallel processing may be advantageous. Furthermore, it should not be understood that the separation of various configurations in the embodiments described above is necessarily required, and it should be understood that the described program components and systems may generally be integrated together into a single software product or be packaged into multiple software products.

Although the embodiments of the present disclosure have been described with reference to the accompanying drawings, one skilled in the art to which the present disclosure belongs will appreciate that the present disclosure can also be implemented in other specific forms without changing the spirit or essential features thereof. Therefore, it should be understood that the embodiments described above are in all respects and not limiting. The scope of protection of the present disclosure should be construed based on the claims below, and all technical concepts within the equivalent scope should be construed as being included in the scope of rights defined by the spirit of the present disclosure.

## Claims

1. A battery active discharge device comprising:
a capacitor arranged on a vehicle side and configured to maintain a link voltage in a smoothed state; and
a pre-charge resistor arranged on a battery side and configured to charge or discharge the capacitor arranged on the vehicle side.

2. The battery active discharge device of claim 1, further comprising:
a main positive relay arranged on the battery side; and
a pre-charge relay having a first end connected to a first end of the main positive relay and a second end connected to a first end of the pre-charge resistor,
wherein a second end of the pre-charge resistor is connected to a second end of the main positive relay.

3. The battery active discharge device of claim 2, wherein the capacitor is charged through the pre-charge resistor when the pre-charge relay is turned on.

4. The battery active discharge device of claim 2, further comprising:
a main negative relay arranged on the battery side, and
an active discharge switch having a first end connected between the second end of the pre-charge relay and the first end of the pre-charge resistor, and a second end connected to one end of the main negative relay.

5. The battery active discharge device of claim 4, wherein the capacitor is discharged through the pre-charge resistor when the active discharge switch is turned on.

6. A battery active discharge-related control device comprising:
a processor;
a network interface;
a memory; and
a computer program loaded into the memory and configured to be executed by the processor,
wherein the processor is configured to control:
a capacitor arranged on a vehicle side and configured to maintain a link voltage in a smoothed state; and
a pre-charge resistor arranged on a battery side and configured to charge or discharge the capacitor arranged on the vehicle side.

7. The battery active discharge-related control device of claim 6, wherein the processor comprises
a main positive relay arranged on the battery side; and
a pre-charge relay having a first end connected to a first end of the main positive relay and a second end connected to a first end of the pre-charge resistor, and
the pre-charge resistor is controlled such that a second end is connected to a second end of the main positive relay.

8. The battery active discharge-related control device of claim 7, wherein the processor is further configured to control the capacitor to be charged via the pre-charge resistor when the pre-charge relay is turned on.

9. The battery active discharge-related control device of claim 7, wherein the processor is further configured to control:
a main negative relay arranged on the battery side; and
an active discharge switch having a first end connected between the second end of the pre-charge relay and the first end of the pre-charge resistor, and a second end connected to one end of the main negative relay.

10. The battery active discharge-related control device of claim 9, wherein the processor is further configured to control the capacitor to be discharged via the pre-charge resistor when the active discharge switch is turned on.
